# EUROPÄISCHE PATENTSCHRIFT

(11) **EP 1 297 372 B1**
(45) Veröffentlichungstag und Bekanntmachung des Hinweises auf die Patenterteilung: **10.01.2007**
(21) Anmeldenummer: 01951398.5
(22) Anmeldetag: 18.06.2001
(51) Int. Cl.: G02B 6/26

(54) **VORRICHTUNG ZUR ÜBERTRAGUNG OPTISCHER SIGNALE**
DEVICE FOR TRANSMITTING OPTICAL SIGNALS
DISPOSITIF DE TRANSMISSION DE SIGNAUX OPTIQUES

(30) Priorität: 20.06.2000 DE 10029206
(43) Veröffentlichungstag der Anmeldung: 02.04.2003
(73) Patentinhaber: Schleifring und Apparatebau GmbH, 82256 Fürstenfeldbruck (DE)
(72) Erfinder: POISEL, Hans, 91227 Leinburg (DE); THIELE, Hans, 97422 Schweinfurt (DE)
(74) Vertreter: Lohr, Georg
(86) Internationale Anmeldenummer: PCT/DE2001/002247
(87) Internationale Veröffentlichungsnummer: WO 2001/098801

(56) Entgegenhaltungen:
- DE-A- 4 101 043
- JP-A- 5 333 232
- US-A- 4 772 093
- US-A- 4 872 737
- US-A- 4 875 750
- US-A- 5 257 332
- US-A- 5 311 535
- US-A- 5 535 294
- US-A- 5 621 830
- US-A- 5 872 879
- US-A- 5 996 376
- MULLER-FIEDLER R ET AL: "OPTOELEKTRONISCHE MIKROSYSTEME" BOSCH TECHNISCHE BERICHTE, ROBERT BOSCH, STUTTGART, DE, Nr. 56, 1. Dezember 1994 (1994-12-01), Seiten 11-26, XP000500603 ISSN: 0006-789X
- M. SNOWBELL ET AL.: "Efficient Self-Aligning Multibeam Coupling into a Single-Mode Fiber" JOURNAL OF LIGHTWAVE TECHNOLOGY, Bd. 13, Nr. 1, Januar 1995 (1995-01), Seiten 55-61, XP002192125
- E.G. PAEK: "Nonmechanical Image Rotation with an Acousto-optic Dove Prism" OPTICS LETTERS, Bd. 22, Nr. 15, 1. August 1997 (1997-08-01), Seiten 1195-1197, XP002192126
- J.A. SPEER, W.W. KOCH: "The Diversity of Fiber Optic Rotary Connectors (Slip Rings)" SPIE COMPONENTS FOR FIBER OPTIC APPLICATIONS, Bd. 839, 1987, Seiten 122-129, XP001057754 in der Anmeldung erwähnt
- MILSTER T.D.: 'Handbook of Optics Vol. II', 1995, MCGRAW-HILL, NEW YORK * Seiten 7.1-7.2 *

## Beschreibung

### Technisches Gebiet

Die Erfindung betrifft eine Vorrichtung zur Übertragung optischer Signale, insbesondere über Schnittstellen zwischen rotatorisch bewegbaren Teilen.

In vielen Applikationen Optischer Datenübertragungen mit Lichtwellenleitern ist auch eine Übertragung über drehende Schnittstellen notwendig. Hierzu sind dem Stand der Technik entsprechend verschiedene Einkanal-Übertragungssysteme bekannt. Mit steigenden Datenraten nimmt auch die Anzahl der zu übertragenden Kanäle zu. Somit nehmen die Einsatzgebiete für mehrkanalige Übertragungssysteme stark zu.
Beispielsweise ist beim Einsatz von Kabeltrommeln mit Lichtwellenleitern im Kabel, bei denen beim Ausbringen oder Einholen des Kabels Datenübertragung über die Lichtwellenleiter stattfinden muss, ein optischer Mehrkanalübertrager notwendig. Derartige Kabeltrommeln werden beispielsweise in Remotely Operated Vehicles (ROV) für Land und Wasser (Bombenentschärfungsdrohne, Tauchroboter in der Offshoreindustrie) bzw. Sonar "to-wed arrays", welche hinter Schiffen hergezogen werden um den Meeresboden zu vermessen, eingesetzt. Weitere Einsatzgebiete für Mehrkanalübertrager sind beispielsweise drehbare Fernerkundungsinstrumente für zivile, wissenschaftliche und militärische Applikationen, die hohe Datenströme erzeugen (Radar, IR/visuell ect.), wie z.B. Kameraköpfe unter Hubschraubern, unbemannten Flugkörpern (UAV-unmanned aerial vehicle), Großteleskope, Satelliten.

Für den Einsatz auf Schiffen und Flugzeugen ist ein robustes Design notwendig (shock and vibration), speziell was die Justagestandfestigkeit betrifft (was bei wenigen kleinen Komponenten offensichtlich besser zu realisieren ist als bei vielen großen). Im Fall von Flugzeugen, im Speziellen Flugdrohnen, sind geringes Gewicht und kleine Abmessungen ein zusätzliches entscheidendes Kriterium das von den bisher bekannten Lösungen kaum erreicht wird.

### Stand der Technik:

Zur mehrkanaligen Drehübertragung sind zahlreiche Lösungsansätze bekannt. Eine gute Übersicht gibt der Aufsatz von Speer und Koch :"The diversity of fiberoptic rotary connectors", SPIE Vol 839, S. 122-129.
Grundsätzlich lassen sich die Lösungsansätze folgendermaßen einteilen:
- Konzentrische Faserbündel, bei denen das Licht des jeweils zu übertragenden Kanals auf konzentrische, (hohl-)zylindrische Lichtwellenleiteranordnungen verteilt wird, die an der Schnittstelle gegeneinander verdreht werden können.
   Eine solche Anordnung ist in der US-Patentschrift 4,027,945 beschrieben.
   Der wesentliche Nachteil dieser Anordnung ist, daß die Lichtleiter um so größere Durchmesser benötigen, je weiter außen der jeweilige Kanal liegt. Dieses System ist beispielsweise mit Plastik-Lichtleitern sehr gut realisierbar. Eine Übertragung mit Singlemode-Fasern ist praktisch ausgeschlossen, da diese aufgrund ihres äußerst geringen Kerndurchmessers kaum in ausreichender Anzahl mit ausreichender Genauigkeit montiert werden können. Mit steigendem Faserdurchmesser nimmt auch die Dispersion zu und damit die übertragbare Bandbreite bzw. Datenrate ab. Somit entspricht dieses System nicht den Anforderungen, moderner Datenübertragungssysteme, welche Übertragungsraten in GBit/s - Bereich fordern.
- Koaxiale abbildende Anordnungen beruhen im Wesentlichen darauf, dass einem in einer Ringzone rotierenden abstrahlenden Element ein fester (Fokus-) Punkt auf der anderen Seite der Schnittstelle zugeordnet ist.
   Die Abbildung erfolgt durch ein entsprechendes optisches Element wie eine Linse mit unterschiedlichen Brennweiten für unterschiedliche Ringzonen (veröffentlicht in der deutschen Offenlegungsschrift DE 32 07 469 A1) oder ein holografischoptisches Element (veröffentlicht in der deutschen Offenlegungsschrift DE 197 80 642 A1).
   Der Nachteil der erstgenannten Lösung, nämlich dass alle Empfangsfasern auf der optischen Achse (OA) angeordnet sind und es dadurch zu Abschattungen kommt, wird bei den holografisch- optischen Elementen (HOE) vermieden. Jedoch ist die Herstellung der HOEs derzeit noch aufwendig wenn hohe Wirkungsgrade gefordert sind, und bedingt durch die kleineren Ablenkwinkel bei den bevorzugt eingesetzten binären HOEs ergeben sich große Baulängen. Für Singlemode-Fasern sind derzeit HOEs nur mit großen Verlusten einsetzbar. Zudem ist dieses Verfahren nur unidirektional einsetzbar. Moderne Hochgeschwindigkeits-Bussysteme benötigen aber grundsätzlich eine bidirektionale Kommunikation.
- Abbildende Anordnungen mit Drehkompensation. Hier kompensiert ein optisches Element, wie beispielsweise ein Dove- Prisma (veröffentlicht in der US-Patentschrift 3,428,812) oder eine "Derotation- Plate" (US-Patentschrift 4,258,976) das mit exakt der halben Drehgeschwindigkeit rotiert, die Drehung. Damit wird eine Anordnung der Stirnflächen der ankommenden Fasern auf die jeweils zugeordneten abgehenden Fasern abgebildet.
   Die Lagerung und der Antrieb des derotierenden Elements mit exakt der halben Winkelgeschwindigkeit der Hauptbewegung erfordert eine teure Präzisionsmechanik. Zudem ergeben sich durch die Zwischenschaltung des derotierenden Elements lange offene Lichtwege und damit verbundene hohe Kopplungsverluste. Gerade beim Einsatz von Singlemode- Fasern ergibt sich hier eine ungenügende optische Übertragungsqualität.

Aus den hier vorgestellten Übertragungssystemen scheiden die beiden erstgenannten für die meisten Einsatzgebiete aus, da sie nicht breitbandig genug sind bzw. nur unidirektionale Übertragung erlauben. Daher wird in den nachfolgenden Ausführungen bevorzugt auf die abbildeten Anordnungen mit Drehkompensation eingegangen. Kernstück sind hier invertierende optischen Elemente, welche mit halber Winkelgeschwindigkeit der Hauptdrehung gedreht werden. Die Lichtstrahlen der einzelnen Übertragungskanäle können dabei mit einer ungeraden Zahl von Reflexionen durch Brechung in nur einer Achse oder durch die Form eines Wellenleiterbündels invertiert werden. Die wichtigsten in der Literatur genannten Bauformen eines invertierenden optischen Elements für diese Zwecke sind:
- Dove Prisma
- Delta Prisma
- Schmidt- Pechan Prisma
- mittenverspiegelte Kugel
- invertierendes Faserbündel (derotation plate)
- achsverspiegelte Gradienten- Stablinse (slab lens)

Die in diesem Dokument durchgeführten Betrachtungen der optischen Systeme sind nicht nur auf gegeneinander drehende Systeme sondern beispielsweise auch auf entlang einer Achse verschiebbaren Systeme anwendbar. Bei linear verschiebbaren Systemen ist selbstverständlich kein derotierendes Element notwendig.

Entscheidenden Einfluss auf die Qualität der hier beschriebenen Übertragungssysteme haben die zur ein- bzw. Auskopplung eingesetzten Optiken. Verschiedene, dem Stand der Technik entsprechende Ausführungen dieser Optiken, insbesondere zum Einsatz der dritten Übertragungstechnologie mit derotierenden Elementen werden nachstehend erläutert. Die Betrachtungen werden beispielhaft für Glasfasern gemacht, sie sind jedoch analog für andere Formen von Lichtleitern wie beispielsweise Kunststoff-Lichtleitfasern oder auch für aktive Komponenten wie Sender oder Empfänger anwendbar.

In der US-Patentschrift US 4,725,116 ist ein modulares Mehrkanalübertragungssystem beschrieben. Dort wird jeder Kanal mittels eines eigenen Spiegels übertragen. Der mechanische Aufwand dieses Systems ist erheblich, da für jeden Spiegel eine eigene Optik und eine entsprechend genaue Lagerung benötigt wird. Zudem vergrößert sich mit zunehmender Kanalzahl die Länge der Strahlengänge, was wiederum eine Verschlechterung der optischen Eigenschaften bedeutet. Zudem treten an denjenigen Stellen, an denen die Zuleitungsfasern den Strahlengang passieren, Dämpfungsspitzen auf. Weiterhin nehmen Baulänge und Gewicht proportional mit der Anzahl der Kanäle zu. Dadurch wächst die Einheit schon bei geringer Kanalzahl zu einer Größe, die für viele Anwendungen nicht akzeptabel ist.

In der US-Patentschrift US 4,872,737 wird ein Mehrkanalübertrager basierend auf einem Dove- Prisma beschrieben. Die Strahlein- bzw. Auskopplung erfolgt mittels mehrerer einzelner Kollimatoren. Diese Kollimatoren müssen individuell justiert werden. Zur präzisen Justage ist ein relativ langer mechanischer Hebel bzw. ein Feingewinde notwendig, welches ebenfalls zusätzlichen Platz in Anspruch nimmt. Somit steigt mit zunehmender Kanalzahl und zunehmender Justagegenauigkeit die abzubildende Fläche, also die gesamte Fläche, die über das derotierende System abgebildet wird, an. Damit ist ein größeres optisches System notwendig, welches durch die längeren Wege wiederum eine höhere optische Dämpfung besitzt und gleichzeitig an die Justagegenauigkeit wiederum höhere Anforderungen stellt. Daher bringt bei einer solchen Lösung beispielsweise die Vergrößerung eines mechanischen Hebels zur Erhöhung der Justagegenauigkeit keine Verbesserung. Vielmehr müssen mit steigender Kanalzahl verbesserte Justagesysteme, welche bei gleichen Platzbedarf eine höhere Justagegenauigkeit bieten, gefunden werden. Eine Möglichkeit bieten hier die ebenfalls in dieser Patentschrift vorgeschlagenen Rhomboidprismen- Spiegel für Strahlumlenkung oder parallelen Strahlversatz. Dadurch lässt sich zwar der Einsatz eines größeren derotierenden Systems vermeiden, dennoch tritt durch den zusätzlichen optischen Weg und die zusätzlichen Oberflächen eine Verschlechterung der optischen Übertragung ein. Die zusätzlichen Komponenten erhöhen die Systemkosten.

Eine äußerst flexible Justage, ohne die abzubildende Fläche stark zu vergrößern, bietet die US-Patentschrift US 5,157,745 an. Die Justage der einzelnen Kanäle erfolgt hier über senkrecht zum Strahlengang verschiebbar angeordnete Korrekturlinsen mit denen die für Single-mode- Übertragung notwendige hohe Genauigkeit durch Justierung erreicht werden kann. Die Lösung ist sehr aufwendig, da eine hohe Anzahl von Bauteilen einem langwierigen Justageprozess unterzogen werden muss. Durch die zusätzlichen Justagekomponenten wird das Übertragungssystem groß, schwer und teuer. Dieses ist sicherlich bei stationären Anwendungen, wie beispielsweise Radaranlagen gut einsetzbar, bei mobilen Anwendungen jedoch, bei denen Stöße und Vibrationen auftreten, wird sich die Optik sehr schnell dejustieren. Zudem besitzt sie durch die hohe Zahl der Luft- / Glasübergänge eine schlechtere Übertragungsqualität als vergleichbare Systeme ohne diese Übergänge.

Um die zuvor beschriebenen Nachteile zu vermeiden, wird in der US-Patentschrift US 5,442,721 ein Bündel aus konventionellen Kollimatoren als gesamte Einheit in den Übertrager eingebaut. Hierdurch ist nur noch eine einzige Justage des gesamten Kollimatorbündels notwendig. Ein wesentlicher Nachteil dieser Bündelung ist jedoch, daß die nicht unerheblichen Toleranzen der einzelnen Kollimatoren nicht kompensiert werden können. Die individuellen Kollimatoren bestehen selbst aus Faserhalterungen und Linsensystemen, welche fest in einer Ferrule miteinander verbunden sind. Die Montagegenauigkeit dieser Kollimatoren ist begrenzt und genügt in der Regel nicht den Anforderungen eines Drehübertragungssystems. Dadurch ist ein solcher Ansatz, bei dem keine individuelle Justage der.Kollimatoren mehr möglich ist insbesondere für ein Singlemode- Übertragungssystem nicht einsetzbar.

Alle zuvor beschriebenen Lösungen haben den Nachteil, daß eine hinreichende optische Genauigkeit wegen fehlender Justagemöglichkeiten nicht erreichbar ist oder die Justage sehr aufwendig und im Dauerbetrieb unzuverlässig ist. Zudem lassen sich mit keiner der zuvor beschriebenen Lösungen hohe Kanalzahlen mit mehr als 5-10 Kanälen realisieren.

### Darstellung der Erfindung

Der Erfindung liegt die Aufgabe zugrunde, ein optisches Übertragungssystem für rotierende Bewegungen bereitzustellen, das die zuvor genannten Nachteile nicht mehr aufweist und insbesondere mit hohen Kanalzahlen in hoher Übertragungsqualität kostengünstig realisierbar ist.

Eine erfindungsgemäße Lösung dieser Aufgabe ist im Patentanspruch 1 angegeben. Weiterbildungen der Erfindung sind Gegenstand der abhängigen Ansprüche.

Alle dem Stand der Technik entsprechenden Lösungen versuchen eine hohe Präzision mit hoher Übertragungsqualität durch gute Justage oder aber eine einfache Justage mit niedriger Übertragungsqualität zu realisieren.
Die erfindungsgemäße Vorrichtung kombiniert eine hohe Präzision und damit eine hohe Übertragungsqualität mit einfacher Justage.

Dies wird erreicht durch den Aufbau der optischen Komponenten als mikrooptisches System. Ein mikrooptisches System wird mittels einheitlicher Prozesse aus einem Stück hergestellt. Damit ist eine mikrooptische Komponente ein multifunktionales Bauteil, bei dem die unterschiedlichen Teilfunktionen mit eben einem solchen einheitlichen Prozeß hergestellt werden. Beispiele für die Integration mehrerer Funktionen sind z. B. Linsen-arrays mit vielen Linsen oder auch Kombinationen aus Linsen und mechanischen Faserhalterungen. Die hierfür geeigneten Prozesse und Fertigungstechnologien sind beispielsweise Liga, Laserwriting u.a. Sie sind häufig aus der Halbleitertechnologie bzw. Mikrosystemtechnik entlehnt bzw. mit diesen Prozessen verwandt. Damit lassen sich mehrere Teilkomponenten bzw. funktionale Teile in einem Prozeß in höchster Genauigkeit fertigen.

Der Einsatz eines mikrooptischen Systems basiert insbesondere auf der Erkenntnis, daß einerseits die Addition von Toleranzen nur durch einen einheitlichen Gesamtprozeß verhindert werden kann und andererseits durch eine Reduzierung der abzubildenden Fläche die optischen Wege verkürzt und damit die Empfindlichkeit gegenüber Toleranzen herabgesetzt werden kann.

Bei den dem Stand der Technik entsprechenden Übertragungssystemen werden die optischen Komponenten einzeln mittels herkömmlicher optischer Fertigungsprozesse, wie beispielsweise Schleifen und Polieren einzelner Linsen hergestellt. Die so hergestellten Linsen werden dann beispielsweise zusammen mit den Glasfasern in einer Ferrule zu einem Kollimator zusammengesetzt. Bei einer solchen herkömmlichen Fertigungstechnologie addieren sich die Toleranzen sämtlicher Prozess-Schritte. Dies sind beispielsweise Konturfehler und Maßtoleranzen der Linsen, Lagefehler der Linsen in den Kollimatoren, Positionstoleranzen der Glasfaser in Bezug auf die Linse, Toleranzen der Ferrule, Lagetoleranzen der Ferrule im Übertrager.

In einer erfindungsgemäßen Ausführung dagegen sind viele Toleranzen bereits durch Prozessvorgaben exakt definiert und reproduzierbar. So ist beispielsweise in einem Lithographieprozess der Abstand zwischen den einzelnen optischen Systemen mit minimalen Toleranzen fest vorgegeben. Ein späterer Zusammenbau oder eine Justage ändern daran nichts. Bestimmte prozessbedingte Fehler und Toleranzen, welche sich zwar minimieren aber nie vollständig eliminieren lassen, sind über die ganze Anordnung konstant. So wird beispielsweise ein durch die versetzte Anordnung der Glasfaser zur Linse verursachtes Schielen der Optik bei allen Optiken gleich und damit durch eine einfache Justage des Gesamtsystems kompensierbar sein. Bei einzelnen gefertigten Komponenten dagegen ist beispielsweise dieses Schielen unterschiedlich stark in unterschiedliche Richtungen ausgeprägt und kann damit nur durch individuelle Justage ausgeglichen werden.

Das passive optische Element besteht aus einem Linsenarray Dieses Linsenarray kann eine eindimensionale, vorzugsweise lineare Anordnung besitzen. Sehr vorteilhaft, da platzsparend sind zweidimensionale Anordnungen der Linsen. Diese können beispielsweise rund bzw. in quadratischer Matrix oder auch seitlich versetzt gegeneinander angeordnet werden. Auch dreidimensionale Anordnungen sind hier vorteilhaft realisierbar. Weiterhin können auch passive optische Elemente wie Führungen von Lichtwellenleitern, insbesondere lichtleitenden Fasern vorgesehen sein. Diese können ebenso ein-, zwei- oder dreidimensional ausgebildet sein.

Nach der der Erfindung sind strahlführende und strahlformende optische Elemente in einer ersten Struktur integriert. Die ein- bzw. auskoppelnden Elemente sind in einer zweiten Struktur integriert, wobei beide Strukturen über einen Formschluß präzise gegeneinander ausgerichtet sind. Ein Linsen- Array mit hochpräzisem pitch (Abstand zwischen den Linsen) wird an einen Array aus Fasern, Empfängern oder Sendern fest montiert, wobei die Ausrichtung entweder über einen Formschluß erfolgt, d.h. über eine planparallele Platte als Abstandshalter (die Dicke des Linsenträgers kann gleich auf deren Brennweite abgestimmt werden) und Führungsfasernuten zur Positionierung oder ein anders ausgeführter Formschluß (siehe US-Patentschrift: US 5,446,815).

In einer weiteren vorteilhaften Ausgestaltung der Erfindung sind strahlführende und strahlformende optische Elemente in einer ersten Struktur integriert. Die ein- bzw. auskoppelnden Elemente sind in einer zweiten Struktur integriert, wobei beide Strukturen dann gegeneinander justiert und später fixiert werden können. Damit erfolgt beispielsweise die Positionierung der ein- bzw. auskoppelnden Komponenten passend zu den Linsen oder umgekehrt. Es erfolgt eine wechselseitige Vorgabe der Positionen bei der Fertigung. Hierzu gibt es verschiedene Alternativen:
- Die einzelnen Fasern werden hinter dem Linsenarray individuell plaziert und dort dann festgeklebt (diese Justagethematik wird auch in zahlreichen Patenten beschrieben, insbesondere in der US-Patentschrift US 5,559,915);
- Die Belichtung legt die Position der Fasern fest: Für die Fasern wird individuell mittels Ausrichtung durch den Fokuspunkt der dazugehörenden Linse die Faserführung gebohrt, z.B. mittels Mikrobearbeitung mit einem Excimerlaser (die Beleuchtung der Linsen-Arrays mit einem Parallelstrahl erzeugt Fokuspunkte die ideal zu den Linsen positioniert sind was die Lage untereinander betrifft);
- Die Belichtung legt die Position der Linsen fest: Es erfolgt die Belichtung einer Ätzmaske für die Linsen durch die Fasern eines Faser-Arrays, so daß die Ätzmasken für die Linsen an den passenden Positionen entstehen.
- Die Fasern werden über mikromechanische Stellelemente in die optimale Position gebracht - aktive Justage (z.B. "Cronos 3D Fiber Aligner"). Dies erfolgt entweder nur einmal mit anschließender Fixierung oder bei hohen Anforderungen an die Drehmodulation kontinuierlich.

Durch die erfindungsgemäße Ausführung als mikrooptisches System kann die abzubildende Fläche des Gesamtsystems sehr stark, meist um mehr als eine Größenordnung reduziert werden. Damit kann die Querschnittsfläche und auch die Länge des derotierenden Elementes entsprechend reduziert werden. So ergeben sich als Folge kürzere optische Wege und damit eine höhere Übertragungsqualität sowie eine geringere Empfindlichkeit gegenüber mechanischen Toleranzen. Somit lassen sich die Vorteile der erfindungsgemäßen Vorrichtung zusammenfassen als:
- Die Mikrotechnik erlaubt diese Komponenten in Genauigkeiten zu erzeugen, die mit zusammengesetzten Einzelkomponenten nicht möglich wären. Das Aufsummieren von einzelnen Fertigungstoleranzen kann verhindert werden. Die Abstände der Strukturelemente sind mit minimalen Toleranzen vorgegeben.
- Durch die hohe Positioniergenauigkeit der Mikrotechnik lassen sich die Außenkonturen der Komponenten mit zentrischen Passungen herstellen, so dass bei der Integration ins Gesamtsystem die Position zur Drehachse nicht mehr justiert werden muss.
- Durch weniger zu justierende optische Einzel-Elemente (und damit weniger Einstellschrauben, Justageflansche) werden die Herstellungskosten reduziert und die Zuverlässigkeit erhöht.
- Durch den (quasi-) monolithischen Aufbau der ein- und ausgangsseitigen Optiken entfallen aufwendige Justagearbeiten der einzelnen Kanäle, bzw. sie können im Rahmen der Herstellung der Komponenten berücksichtigt werden.
- Durch den reduzierten Justageaufwand ergeben sich geringere Fertigungszeiten und damit niedrigere Fertigungskosten
- Durch die deutlich kleinere Bauform lassen sich kostengünstigere mechanische Teile, z. B. derotierendes Element, Lager, Getriebe verwenden bzw. Gewicht sparen.
- Dadurch ergibt sich auch ein Gesamtsystem mit wesentlich reduzierten Abmessungen. Dies eröffnet eine Vielzahl neuer Einsatzgebiete.
- Die flexiblen Herstellungsmethoden der Mikrotechnik erlauben leichte Anpassung an die benötigte Kanalzahl bzw. optische Qualität der Kanäle.
- Bei hochbitratigen Systemen der Zukunft, die im Bereich von Licht-wellenlängen oberhalb 1300 nm betrieben werden, lassen sich Komponenten aus Silizium einsetzen, die für Mikrostrukturierung hervorragend geeignet sind und Dank der hohen Brechzahl sehr gute optische Eigenschaften aufweisen.
- Durch die insgesamt verkleinerten Abmessungen ist der notwendige freie Lichtweg kürzer und damit verbunden die Übertragungsverluste geringer.

Selbstverständlich können in ein Übertragungssystem auch konventionelle Fertigungstechniken mit der erfindungsgemäßen Technologie kombiniert werden. So könnten beispielsweise einige Kanäle zur breitbandigen Datenübertragung erfindungsgemäß in Mikrosystemtechnik realisiert werden, während zusätzliche Kanäle mit geringeren Anforderungen, beispielsweise mit Plastik-Lichtleitfasern auf konventionelle Art gefertigt werden.

Die hier beschriebenen optischen Komponenten lassen sich auch problemlos zur Signalübertragung zwischen stationären Komponenten, wie beispielsweise in Steckern einsetzen.

In einer besonders vorteilhaften Ausgestaltung der Erfindung enthalten die strahlführenden bzw. strahlformenden Elemente mindestens ein aktives bzw. passives optisches Element. Damit ist durch diese nicht nur mittelbar, beispielsweise als Halterung einer zu führenden Lichtleitfaser, sondern unmittelbar die Strahlführung bzw. -Formung, wie z. B. durch Mikrolinsen möglich. Besonders vorteilhaft ist eine kombinierte Ausbildung mit Mitteln zur mittelbaren und unmittelbaren Strahlführung bzw. Formung. Gerade die Kombination einer Halterung der Lichtleitfasern, die z.B. als V-Nut-System ausgeführt ist, mit im Strahlengang hinter den Faserenden angebrachten Mikrolinsen zur Kollimation bzw. Fokussierung kann in idealer Weise alle optischen Funktionen eines erfindungsgemäßen Übertragungssystem erfüllen. Ebenso kann diese Funktion mit einem aktiven Element, wie beispielsweise eine Laserdiode mit dahinter angeordneter Linse erfüllt werden. Ebenso sind aktive Systeme mit mikromechanischen Aktuatoren einsetzbar.
Folgende besondere Ausführungsform ist hier problemlos realisierbar:
- Linsen-Array: auf einem Träger sind mehrere Linsen aufgebracht,
   (z.B. klassisch refraktiv, diffraktiv, als Fresnel-Strukturen
   mit mikrotechnischen Herstellverfahren wie Ätzen oder Prägen erzeugt)
   die die Strahlung wunschgemäß formen und ablenken, also z.B.
   kollimieren oder fokussieren.

Eine andere vorteilhafte Ausgestaltung der Erfindung besitzt integrierte aktive optische Elemente. Dies können beispielsweise Leuchtdioden, Laserdioden oder auch Fotodioden sein.

In einer weiteren vorteilhaften Ausgestaltung der Erfindung sind die aktiven bzw. passiven Elemente ebenfalls aus einem Stück gefertigt.

Eine andere vorteilhafte Ausgestaltung der Erfindung umfaßt strahlführende bzw. strahlformende Elemente, wie Linsen, die zusammen mit Führungen der ein- bzw. auskoppelnden Komponenten gefertigt sind.

In einer weiteren vorteilhaften Ausgestaltung der Erfindung sind strahlführende und strahlformende optische Elemente in einer ersten Struktur integriert. Die ein- bzw. auskoppelnden Elemente sind in einer zweiten Struktur integriert, wobei beide Strukturen kontinuierlich gegeneinander justierbar sind. Dadurch sind insbesondere kontinuierliche oder auch periodische Schwankungen kompensierbar. Diese Justage kann beispielsweise durch einen mikromechanischen Aktuator welche beispielsweise die Arrays gegeneinander verschiebt oder auch ein makromechanisches Stellelement wie beispielsweise ein piezokeramisches Element erfolgen.

In einer weiteren vorteilhaften Ausgestaltung der Erfindung sind strahlführende und strahlformende optische Elemente in einer ersten Struktur integriert. Die ein- bzw. auskoppelnden Elemente sind in einer zweiten Struktur integriert, wobei eine Struktur bei der Herstellung an die andere angepaßt wird. Es wird also zuerst eine der Strukturen hergestellt und dann die zweite so an diese passend erzeugt, daß die Toleranzen minimal sind.

In einer weiteren vorteilhaften Ausgestaltung der Erfindung sind strahlführende und strahlformende optische Elemente in einer ersten Struktur integriert. Die ein- bzw. auskoppelnden Elemente sind in einer zweiten Struktur integriert. Hierbei sind beide Strukturen als miteinander korrespondierende ein-, oder mehrdimensionale Arrays ausgebildet.
Durch die Anordnung in Arrays ist dafür gesorgt, dass für alle Kanäle (2-n) die ein- bzw. auskoppelnden Komponenten und die Linsen in drei Achsen perfekt zueinander justiert sind:
- Abstand der Arrays
- Fokuslage der Linsen
- strahlformung, Ausrichtung in beiden Arrays in den beiden Achsen senkrecht zur optischen Achse
- Parallelität der optischen Achsen der Einzelstrahlen zur mechanischen Drehachse bzw., bei individueller Positionierung, gegeneinander
- Strahlrichtungsgebung
So muß zur exakten Justage nur noch das komplette zweite Array justiert werden. Alternativ dazu besitzt eines dieser Arrays an seinen Komponenten individuelle Stellelemente zur Anpassung der Position der Komponenten an die korrespondierende Komponente der anderen Struktur.

In einer weiteren vorteilhaften Ausgestaltung der Erfindung ist das strahlführende bzw. strahlformende ein photoaktives Medium. Dieses Medium ist derart ausgeführt, daß sich die abbildenden Eigenschaften der Linsen aufgrund der Bestrahlung durch die ein bzw. auskoppelnden Elemente entsprechend einstellen.

In der Erfindung ist ein derotierendes System vorgesehen, wenn mindestens ein Kanal außerhalb der Achse übertragen werden soll.

Eine vorteilhafte Weiterbildungen der Erfindung besteht darin das ein aktives optisches Element als derotierendes System eingesetzt wird. Dieses Element ist derart gestaltet das ist die Derotation durch Änderung seiner optischen Eigenschaften erzeugt und somit nicht mechanisch mit der Drehung bewegt werden muß.
Eine solche Weiterbildung der Erfindung hat.den Vorteil, dass durch wegfallende zusätzliche Lagerungs- und Getriebekomponenten noch einmal Platz und Gewicht gespart werden kann, eventuell sogar durch die Anpassungsfähigkeit des optischen Elements Justageprobleme eliminiert werden können.

In einer weiteren vorteilhaften Ausgestaltung der Erfindung wird als aktives optisches Element zur Derotation ein photoaktives Medium eingesetzt. Damit erfolgt die Derotation gesteuert durch das einfallende Licht.
In einem photoaktiven Material stellen sich die abbildenden Eigenschaften entsprechend der Strahlung aus den ein- und auskoppelnden Elementen von selbst ein. Die "Genauigkeit" wird hier eher durch ein sich selbst anpassendes System erreicht, das auch unempfindlich gegen Dejustagen ist. Das derotierende System wird in Form eines photoaktiven Kristalls realisiert, dessen optische Eigenschaften durch die Bestrahlung mit den zu über-tragenden optischen Signalen geändert werden. Durch die Überlagerung dieser Signale stellt sich im Kristall ein Brechzahlprofil ein (Änderung des Brechungsindex bei Bestrahlung), das dafür sorgt, dass das Licht aller eingekoppelten Kanäle auch optimal in die empfangenden Kanäle übergekoppelt werden kann. Da dieser Effekt durch das zwischen den Fasern, das Signal selbst also die Abbildungsänderung im Kristall bestimmt, führen Änderungen in Position und Richtung der einzelnen Kanäle nicht zu einer Verschlechterung der Übertragung, sondern nur zu einer Anpassung der abbildenden Eigenschaften des Kristalls - d.h. das System selbst justiert sich kontinuierlich nach. Daher spielt die Drehung z.B. der sendenden Seite gegenüber der empfangenden keine Rolle und das photoaktive Element muss auch nicht mitgedreht werden. Diese Lösung ist besonders vorteilhaft da keine weiteren Steuer-/Regelsignale von außen zugeführt werden müssen, d.h. es ist komplett passiv. Ein solches " neuronales optisches System " ist in Efficient Self-Aligning Multibeam Coupling into a Single-Mode Fiber" Journal of Lightwave Technology Vol. 13. No. 1. January 1995, veröffentlicht.

Diese Technologie würde es auch erlauben, die Strahlformung, Richtungsgebung und die optische Derotation mit einem einzigen optischen Element zwischen den Ein- und Ausgangskomponenten zu realisieren.

In einer weiteren Ausgestaltung der Erfindung wird als aktives optisches Element zur Derotation ein akustooptisches Dove-Prisma verwendet. Die Abbildenden Eigenschaften eines invertierenden Elements wie z.B. eines Dove-Prismas werden durch zwei akusto-optische Strahlablenker und einen zylindrischen Hohlspiegel dazwischen ersetzt. Dieses Element steht dann still, die Rotation der Lichtstrahlen wird durch Anlegen periodisch schwankender Spannungen erzeugt. Ein solches Ablenksystem wurde in "Ultrafast Non-mechanical Image Rotation Using an Acousto-optic Dove Prism (AODP)" Optics und Photonics News /December 97, veröffentlicht.

Eine andere Ausgestaltung der Erfindung sieht als derotierendes System ein passives optisches Element vor. Dieses Element nimmt die Derotation Mittel seiner optischen Abbildungsfunktion vor und muß daher nicht mit der Hauptbewegung gedreht werden.

In einer anderen Ausgestaltung der Erfindung wird als derotierendes System ein passiv optisches Element eingesetzt welches invertierend ist. Daher muß dieses Element mit halber Winkelgeschwindigkeit der Hauptdrehung mitgedreht werden.
Das invertierende optische Element des derotierenden Systems (in einer der bekannten Ausführungen wie z. B. Dove Prisma, Invertierendes Faserbündel, etc.) kann bei hohen Anforderungen an geringe Dämpfungsvariationen "aktiv justiert" werden, sowohl einmalig mit anschließender Fixierung wie auch kontinuierlich während des Betriebs. Dies kann über feinfühlige Stellelemente wie z. B. Piezoaktoren erfolgen, die im Fall der kontinuierlichen Justage über einen Regelkreis nachgesteuert werden.
Da wegen mechanischer Fertigungstoleranzen eines invertierenden optischen Elements (z.B. beim Dove-Prisma die Winkelgenauigkeit der brechenden Flanken, oder beim Schmidt-Pechan-Prisma die Ungenauigkeiten durch die Verkittung von zwei Komponenten) bzw. wegen der mit Einstellschrauben nicht beliebig gut erreichbaren Justage der optischen Achse des invertierenden Elements zur Rotationsachse Taumelbewegungen des Fokuspunktes auftreten können - auch bei ideal zur Drehachse justierten Faser-Linsen-Arrays - würden für einige Applikationen inakzeptable Dämpfungsvariationen auftreten.
Ein stabileres Signal über die Rotation (kleinstmögliche Dämpfungsvariation) könnte auch mittels eines aktiv gelagerten invertierenden optischen Elements erreicht werden. Man würde zusätzlich zur mechanischen Grobjustage das Element auf beiden Seiten (rotor- und statorseitig) mit mindestens einem Piezo-Stellelement und einer dazugehörenden Gegenlagerung haltern um die optische Achse des Prismas feinfühlig so einstellen zu können, dass sie mit der mechanische Drehachse des Elements bzw. des rotierenden Faser-Linsen- Arrays übereinstimmt.
Das Piezo- Stellelement hat zunächst den Vorteil dass es viel feinfühligere Bewegungen zulässt als manuelle Justageschrauben. So könnte die tatsächliche optische Achse des Prismas einmalig auf die Rotationsachse ausgerichtet und so fixiert werden. Sind die Dämpfungsschwankungen für eine besonders anspruchsvolle Applikation noch immer zu groß, kann die Justage kontinuierlich auch während der Rotation adaptiv geregelt erfolgen, so dass dann auch Effekte wie Lagerrestspiel, Getriebespiel oder winzige Restdejustagen der Faser-Linsen- Arrays korrigiert werden können. Die Piezo-Stellelemente werden dann über eine Regelschleife so angesteuert, dass die Fasern im Array immer maximal von den Fokuspunkten der Linsen getroffen werden.
Diese Variante hat gegenüber der Einzelfaserjustage den Vorteil, dass nur wenige Stellelemente nötig sind, dass diese größer bauen können und dass zwecks der Regelschleife nur ein Kanal abgefragt werden muss und nicht jeder einzelne. Zudem kann ein eigener Kanal, über den keine weiteren Informationen übertragen werden ausschließlich für Regelungszwecke eingesetzt werden.
Das invertierende optische Element des derotierenden Systems lässt sich in der Bauform etwas verkürzen bzw. was die Herstellung in großen Mengen betrifft vereinfachen, indem die brechenden Oberflächen eines Prismas oder einer Linse durch Fresnel-Strukturen bzw. diffraktive Strukturen ersetzt werden. Eine Abbildung eines solchen Systems wurde in "A New Type of Lens with Binary Subwavelength Structures" Optics and Photonics News, December 1997 veröffentlicht.

### Beschreibung der Zeichnungen

Es zeigen:
- Fig. 1:: Allgemeine Ausführungsform der Erfindung
- Fig. 2:: Monolithischer Kollimatorblock
- Fig. 3:: Aufbau eines monolithischen Kollimatorblocks
- Fig. 4:: Array- Positionierung mittels Formschluß
- Fig. 5:: Faserhalter mit Positionierelementen
- Fig. 6:: Zweidimensionales Array

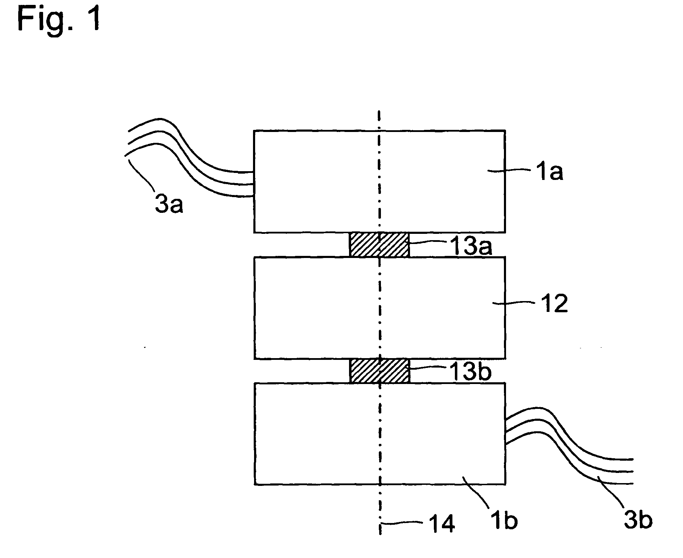

In Fig. 1 ist eine allgemeine Ausführungsform der Erfindung beschrieben darin sind beispielhaft um eine Drehachse (14) drehbar angeordnet ein erster Kollimatorblock (1a) sowie ein zweiter Kollimatorblock (1b) mit einem dazwischen angeordneten derotierenden Element (12). Die lichtleitenden Fasern (3a, 3b) werden in den jeweiligen Kollimatorblöcken, welche als Mikrooptische Komponenten ausgeführt sind, geführt. Durch entsprechend integrierte Linsensysteme werden parallele Strahlenbündel (13a, 13b) erzeugt. Diese werden dann mittels des derotierenden Elements (12) auf den jeweils anderen Kollimatorblock abgebildet.

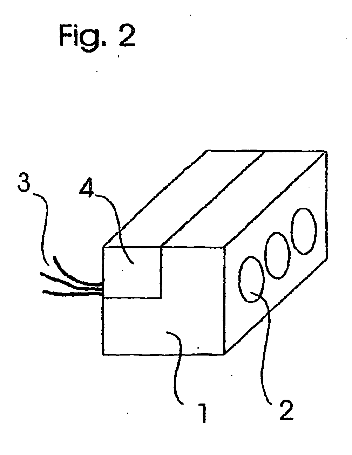

In Fig. 2 ist beispielhaft ein monolithischer Kollimatorblock (1) dargestellt. In diesen integriert sind die Linsen (2) sowie - hier nicht dargestellt - die Aufnahmen für die Fasern (3). Die Faserbefestigung, also die mechanische Fixierung erfolgt mittels eines Klemmblocks (4) in den durch die Faseraufnahmen vorgegebenen Positionen.

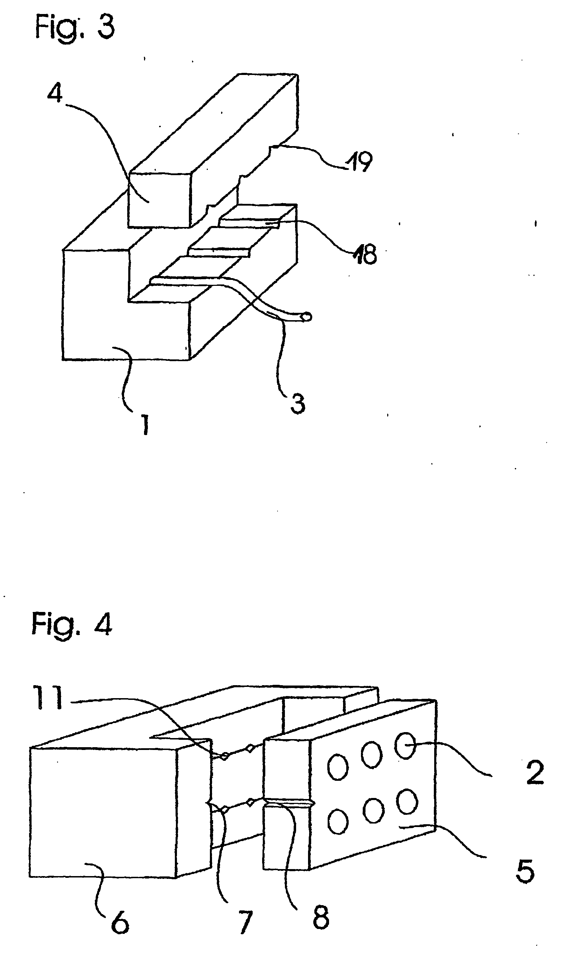

Fig. 3 zeigt einen geöffneten Kollimatorblock (1) aus Fig. 2 von der Rückseite. Hierin ist die Faserhalterung zweiteilig ausgeführt. So ist im Kollimatorblock selbst eine erste V-förmige Nut (18) welche mit einer zweiten Nut (19) im Klemmblock korrespondiert. Zwischen diesen beiden Nuten wird die Faser (3) gehalten.

In Fig. 4 ist eine modifizierte Ausführung eines Mikrooptischen Kollimatorsystems dargestellt. Bei dieser Ausführung erfolgt die exakte Positionierung zwischen einem Linsenarray (5), welches die einzelnen integrierten Linsen (2) enthält und dem Faserarray (6), welches Führungsnuten (11) für die Fasern enthält mittels einer ersten Nut (8) im Linsenarray und einer zweiten Nut (7) im Faserarray. Zu Montage wird ein Paßstift oder auch beispielsweise eine passende Glasfaser in die Öffnung aus den Nuten eingebracht.

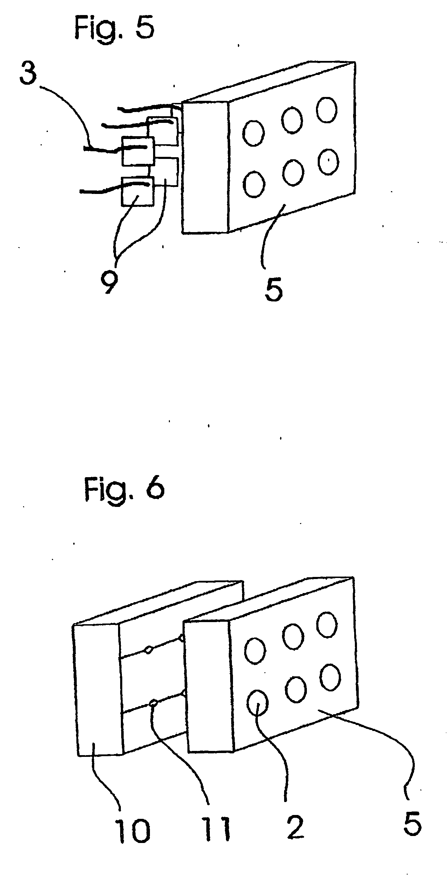

Fig. 5 zeigt eine Anordnung, bei der zu exakten Positionierung der Fasern (3) die Faserhalter (9) mit zugeordneten Positionierelementen vorgesehen sind. Derartige Positionierelementen können beispielsweise Mikromotoren, fiber aligner und andere sein.

In Fig. 6 ist schließlich eine Anordnung mit einem Faserarray -Träger (10) aus Führungsnutenplatten, die sandwichartig aufeinander gestartet sind, dargestellt. Die einzelnen Führungsnuten (11) sind vorzugsweise V-förmig oder auch U-förmig ausgeführt.

## Patentansprüche

1. Optischer Drehübertrager mit einem derotierenden optischen Element und mit mindestens zwei rotatorisch gegeneinander bewegbaren Teilen, wobei an jedem dieser Teile strahlführende bzw. strahlformende Elemente vorgesehen sind, wobei die strahlführenden bzw. strahlformenden Elemente je mindestens ein passives optisches Element enthalten,
**dadurch gekennzeichnet, dass**
das zumindest eine passive optische Element ein Linsenarray aus einem Träger ist, auf dem mehrere Linsen sind, welches mit mikrotechnischen Herstellungsverfahren erzeugt wurde, und welches gegen eine Struktur aus einem Array aus Fasern, Empfängern oder Sendern, über einen Formschluss mittels einer planparallelen Platte als Abstandshalter präzise gegeneinander ausgerichtet ist.

2. Die Vorrichtung nach Anspruch 1,
**dadurch gekennzeichnet, dass**
wenigstens ein zusätzliches aktives Element vorhanden ist, und das aktive Element einen Sender bzw. Empfänger, wie beispielsweise eine Laserdiode oder eine Fotodiode umfasst.

3. Vorrichtung nach einem der vorhergehenden Ansprüche,
**dadurch gekennzeichnet, dass**
ein photoaktives Medium vorgesehen ist, in dem sich die abbildenden Eigenschaften eines Linsenarrays aufgrund der Bestrahlung durch die ein- bzw. aus-koppelnden Elemente entsprechend einstellen.

4. Vorrichtung nach einem der vorhergehenden Ansprüche,
**dadurch gekennzeichnet, dass**
als derotierendes System ein aktives optisches Element dient, das die Derotation durch die Änderung seiner optischen Eigenschaften erzeugt und nicht mitgedreht werden muss.

5. Vorrichtung nach einem der vorhergehenden Ansprüche,
**dadurch gekennzeichnet, dass**
als aktives optisches Element zur Derotation ein photoaktives Medium vorhanden ist.

6. Vorrichtung nach einem der vorhergehenden Ansprüche,
**dadurch gekennzeichnet, dass**
als aktives optisches Element zur Derotation ein akustooptisches Doveprisma vorhanden ist.

7. Vorrichtung nach einem der vorhergehenden Ansprüche,
**dadurch gekennzeichnet, dass**
als derotierendes System ein passiv optisches Element eingesetzt wird, das invertierend ist und mit halber Winkelgeschwindigkeit mitgedreht wird.

## Claims

1. Optical rotating data transmission device comprising a derotating optical element, and at least two component parts that are rotationally movable relative to each other, in which beam guiding or beam shaping elements are provided on each of these parts, and each of the beam guiding or beam shaping elements include at least one passive optical element,
**characterized in that**
the at least one passive optical element is a lens array that consists of a support on which there are a plurality of lenses, and has been produced by micro-technological manufacturing methods, and is precisely aligned with a structure consisting of an array of fibres, receivers, or transmitters in a form-locked configuration by means of a plane parallel plate as a spacer.

2. The device according to claim 1,
**characterized in that**
in addition, at least one active element is present, and the active element comprises a transmitter or receiver, such as a laser diode or a photodiode, for example.

3. Device according to any one of the preceding claims,
**characterized in that**
a photoactive medium is provided in which a self-setting of the imaging properties of a lens array is effected by and in accordance with an irradiation by coupling-in or coupling-out elements.

4. Device according to any one of the preceding claims,
**characterized in that**
an active optical element serves as a derotating system, which produces the derotation by changing its optical properties and need not also be rotated.

5. Device according to any one of the preceding claims,
**characterized in that**
a photoactive medium is present as an active optical element for derotation.

6. Device according to any one of the preceding claims,
**characterized in that**
an acousto-optic Dove prism is present as an active optical element for derotation.

7. Device according to any one of the preceding claims,
**characterized in that**
a passive optical element that is inverting and is mutually rotated at one half of the angular velocity is employed as a derotating system.

## Revendications

1. Transmetteur rotatif de signaux optiques comprenant un élément optique dérotatif et au moins deux pièces mobiles en rotation l'une par rapport à l'autre, des éléments conducteurs de faisceau ou formateurs de faisceau étant prévus sur chacune de ces pièces, les éléments conducteurs de faisceau ou formateurs de faisceau contenant chacun au moins un élément optique passif,
**caractérisé par le fait**
**qu'**au moins un élément optique passif est un réseau de lentilles d'un substrat sur lequel se trouvent plusieurs lentilles, qui a été produit par des procédés de fabrication microtechniques et qui est orienté avec précision par rapport à une structure composée d'un réseau de fibres, récepteurs ou émetteurs par une liaison géométrique ou à conjugaison de formes, au moyen d'une plaque à faces planes et parallèles servant d'entretoise.

2. Le dispositif selon la revendication 1,
**caractérisé par le fait**
**qu'**il existe au moins un élément actif supplémentaire et que l'élément actif comprend un émetteur ou un récepteur, comme par exemple une diode laser ou une photodiode.

3. Dispositif selon l'une des revendications précédentes,
**caractérisé par le fait**
**qu'**il est prévu un milieu photoactif dans lequel les propriétés de reproduction d'un réseau de lentilles se règlent par les éléments de couplage et de découplage sur la base de l'illumination.

4. Dispositif selon l'une des revendications précédentes,
**caractérisé par le fait**
**que** l'on utilise comme système dérotatif un élément optique actif qui produit la dérotation par la modification de ses propriétés optiques et qui n'a pas besoin d'être entraîné en rotation.

5. Dispositif selon l'une des revendications précédentes,
**caractérisé par le fait**
**qu'**il est prévu un milieu photoactif comme élément optique actif pour la dérotation.

6. Dispositif selon l'une des revendications précédentes,
**caractérisé par le fait**
**qu'**il est prévu un prisme de Dove acousto-optique comme élément optique actif pour la dérotation.

7. Dispositif selon l'une des revendications précédentes,
**caractérisé par le fait**
**que** l'on utilise comme système dérotatif un élément optique passif qui est inverseur et entraîné en rotation à demi-vitesse angulaire.
